# EUROPÄISCHE PATENTSCHRIFT

(11) **EP 4 126 621 B1**
(45) Veröffentlichungstag und Bekanntmachung des Hinweises auf die Patenterteilung: **24.01.2024**
(21) Anmeldenummer: 22731633.8
(22) Anmeldetag: 02.06.2022
(51) Int. Cl.: B60W 50/00, B60W 50/08, B60W 50/10

(54) **VERFAHREN UND VORRICHTUNG ZUR ERHÖHUNG DER ANTEILE DES AUTOMATISIERTEN FAHRENS BEI EINEM MINDESTENS TEILAUTOMATISIERT FAHRENDEN FAHRZEUG**
METHOD AND DEVICE FOR INCREASING THE SHARE OF AUTOMATED DRIVING FOR A VEHICLE WHICH DRIVES WITH AT LEAST PARTIAL AUTOMATION
PROCÉDÉ ET DISPOSITIF PERMETTANT D'AUGMENTER LA PART DE CONDUITE AUTOMATISÉE POUR UN VÉHICULE QUI ROULE AVEC UNE AUTOMATISATION AU MOINS PARTIELLE

(30) Priorität: 15.06.2021 DE 102021003073
(43) Veröffentlichungstag der Anmeldung: 08.02.2023
(73) Patentinhaber: Mercedes-Benz Group AG, 70372 Stuttgart (DE)
(72) Erfinder: HOIS, Joana, 71034 Böblingen (DE); HANUSCHKIN, Alexander, 71263 Weil der Stadt (DE)
(74) Vertreter: Novagraaf Group
(86) Internationale Anmeldenummer: PCT/EP2022/065050
(87) Internationale Veröffentlichungsnummer: WO 2022/263188

(56) Entgegenhaltungen:
- DE-A1-102016 214 916
- DE-A1-102018 126 834
- DE-A1-102018 130 355
- US-A1- 2016 209 840

## Beschreibung

Die Erfindung betrifft ein Verfahren zur Erhöhung der Anteile des automatisierten Fahrens bei einem mindestens teilautomatisiert fahrenden Fahrzeug, bei welchem die Bedingungen für das automatisierte Fahren überwacht werden sowie eine Vorrichtung zur Durchführung des Verfahrens.

Die DE 103 35 900 A1 offenbart ein Fahrerassistenzsystem, welches ein mit Sensoren verbundenes Modul zur Überwachung der Bedingungen für das autonome Fahren aufweist. Insbesondere bei teilautomatisiert fahrenden Fahrzeugen kommt es häufig vor, dass infolge mangelnden Vertrauens oder Unsicherheit der Fahrzeugführer die Fahrzeugführung manuell übernimmt. Dadurch wird der Verkehrsfluss negativ beeinflusst, was sich unvorteilhaft auf die Verkehrssicherheit und die Energiebilanz des Fahrzeuges auswirkt.

Aus der DE 10 2018 126834 A1 ist eine Steuereinheit für ein Fahrzeug bekannt, die automatische Eingriffe in die Längs- und/oder Querführung des Fahrzeugs bewirkt. Die Steuereinheit ist eingerichtet, Reaktionsinformation in Bezug auf eine Reaktion eines Nutzers des Fahrzeugs auf zumindest einen automatischen Eingriff des Fahrzeugs zu ermitteln. Außerdem ist die Steuereinheit eingerichtet, zumindest einen Betriebsparameter des Fahrzeugs, der einen Einfluss auf automatische Eingriffe in die Längs- und/oder Querführung des Fahrzeugs hat, in Abhängigkeit von der Reaktionsinformation anzupassen.

Die DE 10 2016 214916 A1 offenbart ein Verfahren zum Betreiben eines Kraftfahrzeugs, bei welchem das Kraftfahrzeug autonom fährt, und bei welchem auf einer Anzeige des Kraftfahrzeugs wenigstens ein von dem Kraftfahrzeug gerade durchgeführtes Manöver und/oder wenigstens ein bevorstehendes Manöver dargestellt wird. Hierbei bewirkt eine Steuerungseinrichtung des Kraftfahrzeugs, dass als das wenigstens eine Manöver ein Fahrstreifenwechsel vorgenommen wird. Die Steuerungseinrichtung wählt aus einer Mehrzahl von vorbestimmten Begründungen für den Fahrstreifenwechsel eine Begründung aus, wobei einem Insassen des Kraftfahrzeugs die ausgewählte Begründung kommuniziert wird.

Aus der US 2016/0209840 A1 ist eine Erfassungseinheit bekannt, die einen Zustand eines Fahrers eines Fahrzeugs erfasst, das dazu konfiguriert ist, automatisch oder manuell gefahren zu werden. Eine Absichtserfassungseinheit erfasst, ob der Fahrer beabsichtigt, von einem automatischen Fahrmodus zu einem manuellen Fahrmodus umzuschalten. Eine Betriebserfassungseinheit erfasst, ob der Fahrer in der Lage ist, das Fahrzeug in dem manuellen Fahrmodus zu betreiben. Basierend auf der Grundlage, dass der Fahrer in der Lage ist das Fahrzeug in dem manuellen Fahrmodus zu betreiben, sagt eine Fahrzustandsvorhersageeinheit einen Fahrzustand des Fahrzeugs in dem manuellen Fahrmodus voraus. Eine Steuereinheit bestimmt, dass der vorhergesagte Fahrzustand des Fahrzeugs eine voreingestellte Bedingung erfüllt und schaltet von dem automatischen in den manuellen Fahrmodus um.

Die DE 10 2018 130355 A1 offenbart ein Fahrstilbewertungssystem mit einem Prozessor, der Fahrdaten eines Fahrers empfängt, wobei der Prozessor beruhend auf den Fahrdaten einen bevorzugten Fahrstil bestimmt. Ein Controller führt in einem autonomen Fahrbetrieb Befehle aus, die dem bevorzugten Fahrstil zugeordnet sind. Um das Vertrauen der Insassen zu vergrößern, wird der autonome Fahrbetrieb basierend auf Reaktionen des Fahrers angepasst.

Aufgabe der Erfindung ist es, ein Verfahren und eine Vorrichtung zur Erhöhung der Anteile des automatisierten Fahrens anzugeben, bei welchen die Anzahl manueller Übernahmen durch den Fahrer reduziert wird, um die Vorteile des auf Verkehrsfluss, Verkehrssicherheit und Energiebilanz optimal ausgelegten automatisierten Fahrens zu nutzen.

Die Erfindung ergibt sich aus den Merkmalen der unabhängigen Ansprüche. Vorteilhafte Weiterbildungen und Ausgestaltungen sind Gegenstand der abhängigen Ansprüche. Weitere Merkmale, Anwendungsmöglichkeiten und Vorteile der Erfindung ergeben sich aus der nachfolgenden Beschreibung, sowie der Erläuterung von Ausführungsbeispielen der Erfindung, die in den Figuren dargestellt sind.

Die Aufgabe ist mit dem eingangs beschriebenen Verfahren dadurch gelöst, dass bei für das automatisierte Fahren erfüllten Bedingungen mittels einem Modell eine Beendigung des automatisierten Fahrens durch eine manuelle Fahrzeugführung prädiziert wird, wobei für den Fall einer prädizierten Übernahme durch den Fahrer eine Informationsausgabe an den Fahrer erfolgt, welche den Fahrer über eine zuverlässige Beherrschung der Fahrsituation durch das automatisierte Fahren, d.h. durch das automatisiert fahrende Fahrzeug informiert. Der Fahrer wird darüber informiert, dass eine Übernahme in den manuellen Fahrbetrieb nicht erforderlich ist. Bei dem Modell handelt es sich beispielsweise um ein trainiertes neuronales Netz. Das Modell wird beispielsweise durch repräsentative Fahrer vortrainiert und in Fahrzeugen implementiert. Vorzugsweise wird das Modell durch individuelle Fahrer personifiziert weitertrainiert, so dass eine manuelle Übernahme der Fahrzeugführung fahrerspezifisch prädiziert werden kann. Das Modell prädiziert eine manuelle Übernahme, sobald die Wahrscheinlichkeit über einem vorgegebenen Wert liegt. Erfolgt in eine spezifischen Fahrsituation selten eine manuelle Übernahme, dann ist die Wahrscheinlichkeit gering, erfolgt die Übernahme oft bis immer, dann ist die Wahrscheinlichkeit hoch. Die Anzahl der manuellen Übernahmen des Fahrbetriebs durch den Fahrer wird dadurch reduziert, da das Vertrauen des Fahrers gegenüber dem automatisierten Fahren gesteigert wird. Die Verlängerung des automatisierten Fahrens erhöht die Verkehrssicherheit und verbessert den Verkehrsfluss.

Vorteilhafterweise wird aus der Überwachung der Bedingungen für das automatisierte Fahren eine Funktionsgüte des automatisierten Fahrens bestimmt, wobei für den Fall einer prädizierten Übernahme durch den Fahrer die Informationsausgabe an den Fahrer nur erfolgt, sofern die Funktionsgüte des automatisierten Fahrens über einem vorgegebenen Grenzwert liegt. Dadurch wird gewährleistet, dass bei einer geringen Funktionsgüte des automatisierten Fahrens, der Fahrer in seiner Absicht, den manuellen Fahrbetrieb zu übernehmen, nicht beeinflusst wird. Zur Unterstützung des Fahrers in seiner Übernahmeabsicht, kann in diesem Fall eine Übernahmeforderung durch das Fahrzeug ausgelöst werden.

In einer Ausgestaltung wird für den Fall einer manuellen Fahrzeugübernahme ohne Aufforderung und bei für das automatisierte Fahren erfüllten Bedingungen, insbesondere bei einer über dem Grenzwert liegenden Funktionsgüte, der Fahrer darüber informiert, wie die Fahrbetriebsdaten eines hypothetischen automatisierten Fahrens ohne manuelle Fahrzeugübernahme ausgesehen hätten. Dadurch wird der Fahrer in die Lage versetzt das manuelle Fahrmanöver mit simulierten automatisierten Fahrmanövern zu vergleichen und seine Entscheidung zu überprüfen.

In einer Variante wird das Modell mit dem Verhalten des Fahrers, dem Verhalten des automatisiert fahrenden Fahrzeugs, den Fahrsituationen und/oder Umgebungsbedingungen umfassenden Daten trainiert, so dass mithilfe des Modells ein Zeitpunkt für eine durch den Fahrer ohne Aufforderung durch das Fahrzeug erfolgende Übernahme der manuellen Fahrzeugführung prädiziert werden kann. Durch die Vielzahl der Daten lässt sich die Übernahme der Fahrzeugführung durch den Fahrer sehr genau prädizieren. Insbesondere wird das Modell fahrerspezifisch personalisiert, abgespeichert und ausgewertet, d.h. ein Prädizieren kann immer mit einem dem aktuellen Fahrer zugeordneten Modell erfolgen.

In einer Ausführungsform wird das Modell auf einem zentralen Server hinterlegt und mit Daten einer Fahrzeugflotte trainiert. Zu diesem Zweck werden die Fahrer einer Flotte in ihrem Verhalten klassifiziert und verschiedene Modelle werden mit den Daten jeweils einer Klassifizierung trainiert, die für die Prädizierung der manuellen Übernahme durch einen einer Fahrerklasse zugeordneten Fahrer zugrunde gelegt wird.

Es ist von Vorteil, wenn die Informationsausgabe an den Fahrer durch eine Funktionsgrafik, eine Sprachausgabe und/oder Textausgabe erfolgt. Dadurch wird sichergestellt, dass der Fahrer die Information in Abhängigkeit von dem jeweiligen Informationstyp sowie in Abhängigkeit der Anzahl der zu übertragenden Daten zuverlässig informiert wird.

In einer weiteren Ausgestaltung wird das automatisierte Fahren zur Reduzierung der Übernahmehäufigkeit bei einer prädizierten Übernahme durch den Fahrer ohne Übernahmeaufforderung durch Veränderung des Verhaltens des automatisiert fahrenden Fahrzeugs angepasst. Dabei werden Fahrparameter, wie Geschwindigkeit oder Abstand, iterativ oder experimentell oder nach hinterlegten Kennfeldern verändert, sobald ein Prädizieren einer manuellen Übernahme aufgrund einer entsprechend hohen Wahrscheinlichkeit vorliegt. Da das Training des Modells für die Prädizierung der manuellen Fahrzeugübernahme weiterläuft, nimmt die Häufigkeit einer realen und damit auch der prädizierten Übernahme und die damit verbundene Fahrerinformation entsprechend des veränderten Fahrverhaltens des Fahrzeuges ab. Nach einer Veränderung des Verhaltens des automatisiert fahrenden Fahrzeugs wird die Informationsausgabe an den Fahrer beibehalten, so dass die Informationsausgabe und die Veränderung des Fahrverhaltens gleichzeitig eine Reduzierung der Wahrscheinlichkeit einer manuellen Übernahme bewirken. Sobald aufgrund der reduzierten Übernahmewahrscheinlichkeit keine Fahrerinformation mehr erfolgt, findet im Idealfall aufgrund des veränderten Fahrverhaltens und des gestärkten Vertrauens des Fahrers keine manuelle Fahrzeugübernahme in entsprechender Fahrsituation mehr statt. In einer anderen Variante wird nach Veränderung des Fahrverhaltens die Informationsausgabe unterdrückt und erst wieder aktiviert, sobald trotz Veränderung des Fahrverhalten in betreffender Fahrsituation eine manuelle Fahrzeugübernahme erfolgt.

In einer weiteren Variante werden die zur Reduzierung der Übernahmehäufigkeit als wirksam ermittelten Fahrparameter eines Fahrzeuges im automatisierten Fahrbetrieb über den Server auf andere Fahrzeuge übertragen. Diese Maßnahme ist immer dann einsetzbar, wenn der Fahrer häufig den automatisierten Fahrbetrieb durch manuelle Übernahme ohne Aufforderung durch das Fahrzeug beendet. Sie dient dazu, dass Vertrauen des Fahrers in das automatisierte Fahren weiter zu erhöhen.

Ein weiterer Aspekt der Erfindung betrifft eine Vorrichtung zur Erhöhung der Anteile des automatisierten Fahrens bei einem mindestens teilautomatisiert fahrenden Fahrzeug, umfassend ein Modul zur Überwachung der Bedingungen für das automatisierte Fahren. Bei einer Vorrichtung, die die Anzahl manueller Übernahmen durch den Fahrer reduziert, um die Vorteile des auf Verkehrsfluss, Verkehrssicherheit und Energiebilanz optimal ausgelegten automatisierten Fahrens zu nutzen, ist ein Überwachungsmodul mit einem hinterlegten Modell zum Prädizieren einer Fahrerabsicht zur Beendigung des automatisierten Fahrens durch eine manuelle Fahrzeugführung eingerichtet, wobei eine Aktionseinheit, d.h. ein Steuergerät für den Fall einer prädizierten Übernahme durch den Fahrer bei für das automatisierte Fahren erfüllten Bedingungen, eine Information an den Fahrer ausgibt, welche den Fahrer über eine zuverlässige Beherrschung der Fahrsituation durch das automatisierte Fahren, d.h. durch das automatisiert fahrende Fahrzeug informiert.

Vorteilhafterweise sind das Überwachungsmodul und/oder das Aktionsmodul jedes Fahrzeuges einer Fahrzeugflotte drahtlos mit einem fahrzeugexternen Server zur Klassifizierung von Gruppen mit ähnlichen Übergabecharakteristiken vom automatisierten Fahren zum manuellen Fahrbetrieb gekoppelt. Somit können die in den Fahrzeugen einer Flotte auf verschiedene Fahrer trainierten Modelle zentral ausgewertet werden und bei Bedarf an Fahrzeuge ausgegeben werden, deren Fahrer einer der Klassifizierungen entsprechen

Weitere Vorteile, Merkmale und Einzelheiten ergeben sich aus der nachfolgenden Beschreibung, in der - gegebenenfalls unter Bezug auf die Zeichnung - zumindest ein Ausführungsbeispiel im Einzelnen beschrieben ist. Gleiche, ähnliche und/oder funktionsgleiche Teile sind mit gleichen Bezugszeichen versehen.

Es zeigen:
- Fig. 1: ein Ausführungsbeispiel für ein automatisiert fahrendes Fahrzeug mit der erfindungsgemäßen Vorrichtung,
- Fig. 2: ein Ausführungsbeispiel des erfindungsgemäßen Verfahrens.

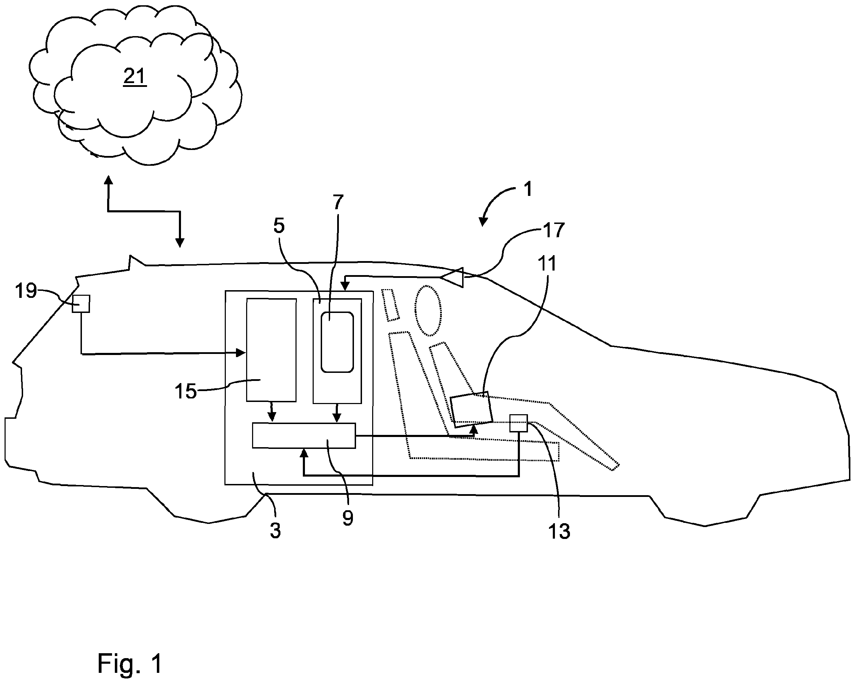

In Fig. 1 ist ein automatisiert fahrendes Fahrzeug 1 mit der erfindungsgemäßen Vorrichtung 3 dargestellt. Die Vorrichtung 3 ist als Fahrzeugassistent ausgebildet und umfasst ein Überwachungsmodul 5, in welchem ein Modell 7 zum Prädizieren einer Fahrerabsicht zur Beendigung des automatisierten Fahrens des Fahrzeuges 1 durch eine manuelle Fahrzeugführung abgelegt ist. Dieses Überwachungsmodul 5 ist mit einem Aktionsmodul 9 gekoppelt, welches für den Fall, dass bei einer prädizierten Übernahme durch den Fahrer bei für das automatisierte Fahren erfüllten Bedingungen eine Information an den Fahrer ausgibt, welche den Fahrer über eine zuverlässige Beherrschung der Fahrsituation durch das automatisierte Fahren informiert. Zur Ausgabe dieser Information ist das Aktionsmodul 9 mit einer Anzeigeeinheit 11 zur Anzeige von Informationen als Funktionsgrafik oder Text und einem Lautsprecher 13 für eine Sprachausgabe verbunden. Zur Prüfung, ob die Bedingungen für das automatisierte Fahren durch das Fahrzeug 1 erfüllt sind, ist ein Modul 15 zur Überwachung der Bedingungen für das automatisierte Fahren eingerichtet, welches ebenfalls auf das Aktionsmodul 9 geführt ist. Das Aktionsmodul 9, das Modul 15 und das Überwachungsmodul 5 sind entweder als eigenständige Steuergeräte oder in einem Steuergerät integriert.

Das Überwachungsmodul 5 ermittelt mittels Sensoren 17, wie Kamera, Lenksensoren, biometrischen Sensoren des Fahrzeugs 1 kontinuierlich den Zustand, die Aufmerksamkeit und das Verhalten des Fahrers und gibt diese an das Modell 7 aus. Gleichzeitig werden dem Modell 7 Verkehrsdaten, Wetter, Straßenverlauf, Fahrsituation, Tageszeit u.ä. zugeführt. Mit all diesen Daten wird das Modell 7 dahingehend trainiert, einen Zeitpunkt bzw. eine Charakteristik für eine durch den Fahrer selbständige, d.h. ohne Aufforderung durch das Fahrzeug, erfolgende manuelle Übernahme des Fahrbetriebs vorauszusagen, was einer Beendigung des automatisierten Fahrens entspricht. Das Modell 7 bedient sich dabei statistischer Methoden oder Methoden zum maschinellen Lernen. Vorteilhafterweise kann es als neuronales Netzwerk ausgebildet sein. Das Modell 7 ist in einem eigenen Steuergerät oder einem Steuergerät mit zumindest einem der vorab genannten Modulen integriert.

Mittels des Moduls 15 zur Überwachung des automatisierten Fahrens werden die für das automatisierte Fahren erforderlichen Bedingungen auf ihre Funktionsgüte überwacht. Es wird mittels weiterer Sensoren 19 das Umfeld des Fahrzeuges 1, beispielsweise hinsichtlich Verkehrsteilnehmer, Hindernissen, Kreuzungen u.ä. observiert. Aus der Überwachung bestimmt das Aktionsmodul 9 die aktuelle Funktionsgüte des automatisierten Fahrens und vergleicht diese mit einem Grenzwert. Wird der Grenzwert durch die ermittelte Funktionsgüte unterschritten, wird automatisch durch das Aktionsmodul 9 eine Übernahmeaufforderung zum Einleiten des manuellen Fahrbetriebs an den Fahrer ausgegeben, da ein automatisiertes Fahren nicht mehr sicher ist.

Da in dem Aktionsmodul 9 die Daten aus dem Überwachungsmodul 5 und dem Modul 15 zur Überwachung des automatisierten Fahrens zusammengeführt werden, steuert dieses die für die Kommunikation mit dem Fahrzeugführer notwendigen Aktoren an und gleicht manuelle Fahrmanöver mit simulierten (teil-) automatisierten Fahrmanövern ab. Die Informationsausgabe an den Fahrer erfolgt dabei in einem vorgegebenen Zeitabstand vor dem prädizierten Übernahmezeitpunkt. Der Zeitabstand wird dabei in Abhängigkeit von dem Abstand der ermittelten Funktionsgüte zum Grenzwert bestimmt, d.h. je kleiner der Abstand der Funktionsgüte zum Grenzwert ist, umso kleiner ist der Zeitabstand der Informationsausgabe. Dadurch kann sichergestellt werden, dass die Funktionsgüte des automatisierten Fahrens auch zum Zeitpunkt der prädizierten Übernahme noch über dem Grenzwert liegt und somit die Sicherheit des Fahrens jederzeit gegebenen ist.
Wird die manuelle Übernahme des Fahrbetriebes durch den Fahrer ohne Aufforderung durch das Fahrzeug 1 und bei für das automatisierte Fahren erfüllten Bedingungen, d.h. bei einer über dem Grenzwert liegenden Funktionsgüte, prädiziert, gibt das Aktionsmodul 9 an den Fahrer eine Information darüber aus, wie die Fahrbetriebsdaten eines hypothetischen automatisierten Fahrens ohne manuelle Übernahme ausgesehen hätten. Zu diesen Informationen können die Länge des noch automatisiert zu fahrenden Streckenabschnitts ohne manuellen Eingriff genauso gehören, wie ein Maß für einen Sicherheitsgewinn bei Fortsetzung des automatisierten Fahrens im Vergleich zum manuellen Fahren. Dafür kann ein detektierter geringer manuell bewirkter Abstand zum vorausfahrenden Fahrzeug, eine Geschwindigkeitsüberschreitung, eine Ablenkung u.ä. herangezogen werden.

Darüber hinaus ist das Überwachungsmodul 5 drahtlos mit einem fahrzeugexternen Server 21, wie einem OEM-Datencenter oder einer Cloud-Anwendung, verbunden, welcher mit einer Vielzahl von Fahrzeugen einer Flotte kommuniziert. Das Überwachungsmodul 5 jedes Fahrzeuges 1 übermittelt dem fahrzeugexternen Server 21 die von dem jeweiligen Modell 7 bearbeiteten Daten sowie die Ergebnisse der Prädizierung. Der fahrzeugexterne Server 21 klassifiziert anhand dieser Daten die Fahrer der Flotte. So können diese als sportlich, ängstlich oder sicherheitsbewusst eingestuft werden. Bezugnehmend auf die Klassifizierung werden unterschiedliche Modelle 7 trainiert, die für die Prädizierung der Übernahme für einen Fahrer eines klassifizierten Fahrertyps geeignet sind.

Die Rückmeldung des Überwachungsmoduls 5 an den fahrzeugexternen Server 21 kann dazu genutzt werden, um die Regelung des automatisierten Fahrens zu korrigieren, zu optimieren oder anzupassen. Insbesondere können hierzu die prädiktiven Merkmalswerte extrahiert werden, welche dem verwendeten Modell 7 zu Grunde liegen. Des Weiteren können Gruppen von ähnlichem Nutzungsverhalten des automatisierten Fahrens aus den individuellen Modellen 7 der Fahrzeuge 1 einer Flotte extrahiert werden. Dies ermöglicht die Entwicklung von gruppenspezifischen Ausprägungen des automatisierten Fahrens.

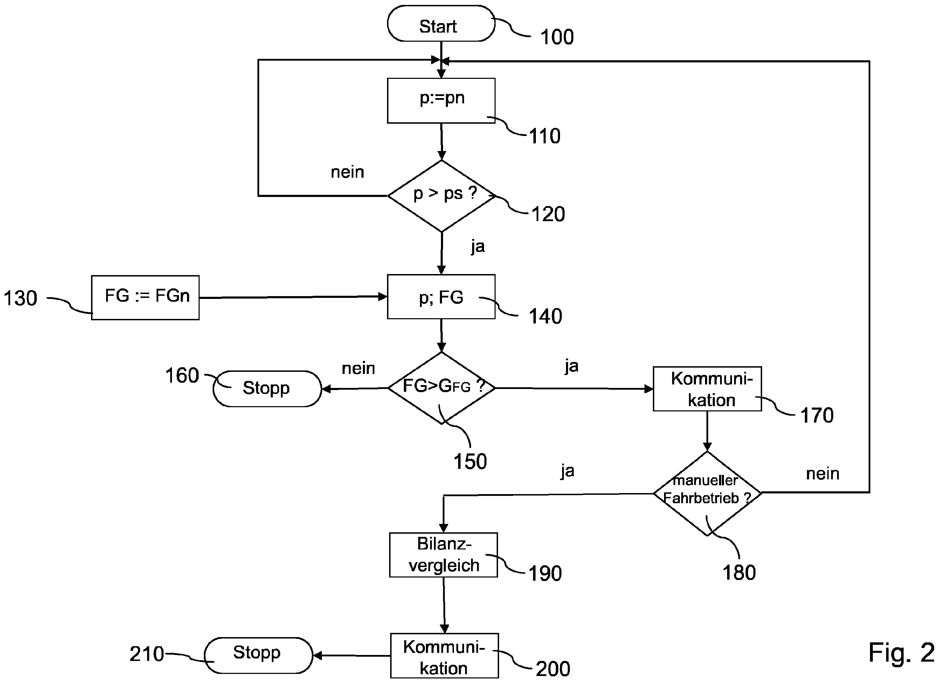

In Fig. 2 ist ein Ausführungsbeispiel des erfindungsgemäßen Verfahrens dargestellt. Während eines automatisierten Fahrens wird das in dem Fahrzeugassistenten (Vorrichtung 1) abgelegte Verfahren im Block 100 gestartet. Das Überwachungsmodul 5 bestimmt in Block 110 eine Wahrscheinlichkeit p für eine manuelle Übernahme des Fahrbetriebes durch den Fahrer. Wird eine hohe Wahrscheinlichkeit p (Überschreitung eines Wahrscheinlichkeitsschwellwertes pₛ im Block 120) und somit eine bevorstehende manuelle Übernahme durch den Fahrer ermittelt, wird ein entsprechendes Signal dem Aktionsmodul 9 zugeführt. Gleichzeitig ermittelt das Modul 15 zur Überwachung des automatisierten Fahrens die Umgebungsdaten und bestimmt daraus die Funktionsgüte FG des automatisierten Fahrens, was im Block 140 ebenfalls dem Aktionsmodul 9 übermittelt wird. Im Block 150 wird die Funktionsgüte FG mit dem Grenzwert G_{FG} verglichen. Wird im Block 150 festgestellt, dass die Funktionsgüte FG unterhalb des Grenzwertes G_{FG} liegt, wird im Block 160 automatisch eine Übernahmeforderung für eine manuelle Fahrzeugführung ausgelöst oder zur Verhinderung eines Systemausfalls des automatisierten Fahrens dieses beendet.

Übersteigt die Funktionsgüte FG den Grenzwert G_{FG}, wird im Block 170 die Kommunikation mit dem Fahrzeugführer durch das Aktionsmodul 9 gestartet. Dabei wird ein geeigneter Kommunikationsweg gewählt, um dem Fahrer über die Leistungsfähigkeit des automatisierten Fahrens zu unterrichten. So kann eine Hinweissymbolik, beispielsweise eine grüne Leuchte, ein Icon im Anzeigeinstrument 13 oder ähnliches eingesetzt werden, welches zusätzlich noch durch eine Textinformation unterstützt wird. Zusätzlich oder alternativ kann auch das Fahrverhalten des automatisierten Fahrens, beispielsweise durch Reduzierung der Geschwindigkeit oder einen höheren Sicherheitsabstand zu einem vorausfahrenden Fahrzeug, angepasst werden, um die Wahrscheinlichkeit p, dass der Fahrer eine manuelle Übernahme des Fahrzeugbetriebes beabsichtigt, zu reduzieren.

Im Block 180 wird geprüft, ob ein manueller Fahrbetrieb eingeleitet wurde. Ist dies nicht der Fall, wird zum Block 110 zurückgegangen. Bei einer manuellen Übernahme berechnet das Aktionsmodul 9 im Block 190, wie sich die Energie-, Verkehrsfluss- und Sicherheitsbilanz der aktuellen manuellen Übernahme von einem hypothetisch weitergeführten automatisierten Fahren (shadow mode) unterscheidet. So kann der Fahrer nachträglich im Block 200 darüber informiert werden, wie die Fahrleistung während des automatisierten Fahrens gewesen wäre. Diese Information kann ebenfalls dazu genutzt werden, um zukünftig darüber zu entscheiden, ob eine Kommunikation an den Fahrer aufgrund einer prädizierten manuellen Übernahmeabsicht gestartet wird, wenn beispielsweise der Unterschied zwischen dem automatisierten Fahren und der manuellen Übernahme hinsichtlich Energie-, Verkehrsfluss- und Sicherheitsbilanz als zu gering betrachtet wird. Weiterhin kann diese Information verwendet werden, wenn die Wahrscheinlichkeit p, die in dem Überwachungsmodul 5 bestimmt wird, zu hoch ist, so dass eine manuelle Übernahme auch mittels Kommunikation unausweichlich ist. Anschließend wird das Verfahren im Block 210 beendet.

Die Arbeitsweise des Fahrzeugassistenten soll anhand der folgenden Anwendung näher erläutert werden. In der Anwendung wird das automatisierte Fahren regelmäßig von einem individuellen Fahrer auf der Autobahn vor Auffahrten deaktiviert. Die Zeitpunkte ti der jeweiligen Übergabeanforderungen des Fahrers von dem das automatisierte Fahren steuernden Fahrzeugassistenten zum manuellen Steuern werden aufgezeichnet. Zusätzlich werden die Merkmalswerte sowohl in dem Überwachungsmodul 5 als auch in dem Modul 15 zur Überwachung des automatisierten Fahrens zu den Zeitpunkten ti sowie einem Zeitraum tn-i vor den jeweiligen Zeitpunkten ti gespeichert. In dem Modell 7 werden beim Training die aufgezeichneten Merkmalswerte mit einer hohen Wahrscheinlichkeit p der Übergabeanforderung verknüpft. Hier lernt das Modell 7 zum Beispiel, dass der Fahrmodus Autobahnfahren sowie Geolokationen kurz vor einer Auffahrt eine manuelle Übergabeforderung wahrscheinlich machen. Befindet sich das Fahrzeug 1 nun mit dem individuellen Fahrer auf der Autobahn kurz vor einer Auffahrt informiert die Aktionseinheit 9 den Fahrer bevor der Fahrzeugassistent die Information sendet, dass eine manuelle Übernahme nicht erforderlich ist. Dies geschieht zu einem Zeitpunkt, bevor der Fahrer selbst bewusst die Entscheidung trifft, eine manuelle Übergabeanforderung zu stellen. Zusätzlich kann das das Fahrzeug in dieser Fahrsituation mit prädizierter manueller Übernahme verschiedene Varianten des Fahrverhaltens des Fahrzeuges 1 testen, indem beispielsweise ein größerer oder kleinerer Sicherheitsabstand zum vorausfahrenden Fahrzeug oder die mittlere oder die linke Fahrspur auf der Autobahn gewählt wird oder eine zusätzliche Kommunikation an die Umgebung, wie beispielsweise an sich im Fahrzeugumfeld bewegende Verkehrsteilnehmer, ausgesendet wird. Bei Variation des Fahrerverhaltens wird vorzugsweise keine Information an den Fahrer ausgegeben, um beobachten zu können, ob die Variante weiter zu einer manuellen Übernahme führt oder diese erfolgreich vermieden werden kann. Führt eine Variante erfolgreich dazu eine manuelle Übernahme zu vermeiden, wird diese in das Fahrprofil des Fahrassistenten übernommen. In Folge lernt das Modell, dass in dieser modifizierten Fahrweise eine manuelle Übernahme unwahrscheinlich ist, womit bei dieser Fahrweise in der Fahrsituation kein Prädizieren einer manuellen Übernahme und zugehörige Schritte erfolgen.

Eine solche Variation des Fahrverhalten des Fahrzeuges 1 kann in den Fahrzeugassistenten vordefiniert sein oder explorativ vom System in vordefinierten Grenzen gelernt werden.

## Patentansprüche

1. Verfahren zur Erhöhung der Anteile des automatisierten Fahrens bei einem mindestens teilautomatisiert fahrenden Fahrzeug, bei welchem die Bedingungen für das automatisierte Fahren überwacht werden,
wobei bei für das automatisierte Fahren erfüllten Bedingungen mittels einem Modell eine Beendigung des automatisierten Fahrens durch eine manuelle Fahrzeugführung prädiziert wird, **dadurch gekennzeichnet, dass**
für den Fall einer prädizierten Übernahme durch den Fahrer eine Informationsausgabe an den Fahrer erfolgt, welche den Fahrer über eine zuverlässige Beherrschung der Fahrsituation durch das automatisierte Fahren informiert.

2. Verfahren nach Anspruch 1,
**dadurch gekennzeichnet, dass**
aus der Überwachung der Bedingungen für das automatisierte Fahren eine Funktionsgüte des automatisierten Fahrens bestimmt wird, wobei für den Fall einer prädizierten Übernahme durch den Fahrer die Informationsausgabe an den Fahrer nur erfolgt, sofern die Funktionsgüte über einem vorgegebenen Grenzwert liegt.

3. Verfahren nach Anspruch 1 oder 2,
**dadurch gekennzeichnet, dass**
für den Fall einer manuellen Fahrzeugübernahme ohne Aufforderung und bei für das automatisierte Fahren erfüllten Bedingungen, insbesondere einer über dem Grenzwert liegenden Funktionsgüte, der Fahrer darüber informiert wird, wie die Fahrbetriebsdaten eines hypothetischen automatisierten Fahrens ohne manuelle Fahrzeugübernahme ausgesehen hätten.

4. Verfahren nach Anspruch 1, 2 oder 3,
**dadurch gekennzeichnet, dass**
das Modell mit dem Verhalten des Fahrers, dem Verhalten des automatisiert fahrenden Fahrzeugs, den Fahrsituationen und/oder Umgebungsbedingungen umfassenden Daten trainiert wird, so dass mithilfe des Modells ein Zeitpunkt für eine durch den Fahrer ohne Aufforderung durch das Fahrzeug erfolgende Übernahme der manuellen Fahrzeugführung prädiziert werden kann.

5. Verfahren nach mindestens einem der vorhergehenden Ansprüche,
**dadurch gekennzeichnet, dass**
das Modell auf einem zentralen Server hinterlegt und mit Daten einer Fahrzeugflotte trainiert wird.

6. Verfahren nach mindestens einem der vorhergehenden Ansprüche,
**dadurch gekennzeichnet, dass**
die Informationsausgabe an den Fahrer durch eine Funktionsgrafik, eine Sprachausgabe und/oder Textausgabe erfolgt.

7. Verfahren nach mindestens einem der vorhergehenden Ansprüche,
**dadurch gekennzeichnet, dass**
das automatisierte Fahren zur Reduzierung der Übernahmehäufigkeit bei einer prädizierten Übernahme durch den Fahrer durch Veränderung des Verhaltens des automatisiert fahrenden Fahrzeugs angepasst wird.

8. Verfahren nach mindestens einem der vorhergehenden Ansprüche,
**dadurch gekennzeichnet, dass**
die zur Reduzierung der Übernahmehäufigkeit als wirksam ermittelten Fahrparameter eines Fahrzeuges im automatisierten Fahrbetrieb über den Server auf andere Fahrzeuge übertragen werden.

9. Vorrichtung zur Erhöhung der Anteile des automatisierten Fahrens bei einem mindestens teilautomatisiert fahrenden Fahrzeug, umfassend ein Modul (15) zur Überwachung der Bedingungen für das automatisierte Fahren,
wobei ein Überwachungsmodul (5) mit einem hinterlegten Modell (7) zum Prädizieren einer Fahrerabsicht zur Beendigung des automatisierten Fahrens durch eine manuelle Fahrzeugführung eingerichtet ist, **dadurch gekennzeichnet, dass** eine Aktionseinheit (9) für den Fall einer prädizierten Übernahme durch den Fahrer bei für das automatisierte Fahren erfüllten Bedingungen, eine Information an den Fahrer ausgibt, welche den Fahrer über eine zuverlässige Beherrschung der Fahrsituation durch das automatisierte Fahren informiert.

10. Vorrichtung nach Anspruch 9,
**dadurch gekennzeichnet, dass**
das Überwachungsmodul (5) und/oder das Aktionsmodul (9) jedes Fahrzeuges (1) einer Fahrzeugflotte drahtlos mit einem fahrzeugexternen Server (21) zur Klassifizierung von Gruppen mit ähnlichen Übergabecharakteristiken vom automatisierten Fahren zum manuellen Fahrbetrieb gekoppelt sind.

## Claims

1. Method for increasing the share of automated driving for an at least partly automated vehicle, in which the conditions for automated driving are monitored, a termination of the automated driving as a result of manual vehicle guidance being predicted by means of a model if conditions are fulfilled for automated driving,
**characterized in that**
in the event of a predicted takeover by the driver, information is output to the driver informing the driver that the automated driving has the driving situation reliably under control.

2. Method according to claim 1,
**characterized in that**
a functional quality of the automated driving is determined from monitoring the conditions for automated driving, the information only being output to the driver if the functional quality is above a predefined limit value in the event of a predicted takeover by the driver.

3. Method according to either claim 1 or claim 2,
**characterized in that**
in the event of a manual vehicle takeover without a request and if conditions are fulfilled for automated driving, in particular a functional quality above the limit value, the driver is informed of what the driving data of hypothetical automated driving would have looked like without manual vehicle takeover.

4. Method according to claims 1, 2 or 3,
**characterized in that**
the model is trained with data comprising the behavior of the driver, the behavior of the automated vehicle, the driving situations and/or environmental conditions so that, using the model, a point in time can be predicted for the driver to take over manual vehicle control without a request from the vehicle.

5. Method according to any of the preceding claims,
**characterized in that**
the model is stored on a central server and is trained with data from a vehicle fleet.

6. Method according to at least one of the preceding claims, **characterized in that**
the information is output to the driver by a function graphic, a voice output, and/or text output.

7. Method according to at least one of the preceding claims,
**characterized in that**
the automated driving is adapted to reduce the takeover frequency during a predicted takeover by the driver by means of changing the behavior of the automated vehicle.

8. Method according to at least one of the preceding claims,
**characterized in that**
the driving parameters of a vehicle in automated traveling operations that have been determined to be effective in order to reduce the takeover frequency are transferred to other vehicles via the server.

9. Device for increasing the share of automated driving for an at least partly automated vehicle, comprising a module (15) for monitoring the conditions for automated driving, a monitoring module (5) having a stored model (7) is designed to predict a driver intention for terminating the automated driving as a result of manual vehicle guidance,
**characterized in that**
an action unit (9) for the event of a predicted takeover by the driver if conditions are fulfilled for automated driving outputs information to the driver informing the driver that the automated driving has the driving situation reliably under control.

10. Device according to claim 9,
**characterized in that**
the monitoring module (5) and/or the action module (9) of each vehicle (1) in a vehicle fleet are coupled wirelessly to a vehicle-external server (21) for classifying groups having similar transfer characteristics from automated driving to manual driving operation.

## Revendications

1. Procédé permettant d'augmenter la part de la conduite automatisée dans un véhicule roulant de manière au moins partiellement automatisée, dans lequel les conditions pour la conduite automatisée sont surveillées,
dans lequel
lorsque les conditions pour la conduite automatisée sont remplies, une fin de la conduite automatisée par une commande de véhicule manuelle est prédite au moyen d'un modèle, **caractérisé en ce que**
dans le cas d'une prise en charge prédite par le conducteur, une transmission d'information au conducteur est effectuée, laquelle informe le conducteur d'une maîtrise fiable de la situation de conduite par la conduite automatisée.

2. Procédé selon la revendication 1,
**caractérisé en ce que**
une qualité de fonctionnement de la conduite automatisée est déterminée à partir de la surveillance des conditions pour la conduite automatisée, dans lequel, dans le cas d'une prise en charge prédite par le conducteur, la transmission d'information au conducteur n'est effectuée que si la qualité de fonctionnement est supérieure à une valeur limite prédéfinie.

3. Procédé selon la revendication 1 ou 2,
**caractérisé en ce que**
dans le cas d'une prise en charge de véhicule manuelle sans demande et lorsque les conditions pour la conduite automatisée sont remplies, en particulier lorsque la qualité de fonctionnement est supérieure à la valeur limite, le conducteur est informé de ce à quoi auraient ressemblé les données de mode de conduite d'une conduite automatisée hypothétique sans prise en charge de véhicule manuelle.

4. Procédé selon la revendication 1, 2 ou 3,
**caractérisé en ce que**
le modèle est formé avec des données comprenant le comportement du conducteur, le comportement du véhicule roulant de manière automatisée, les situations de conduite et/ou les conditions d'environnement, de sorte que, à l'aide du modèle, le moment d'une prise en charge de la commande de véhicule manuelle effectuée par le conducteur sans demande par le véhicule peut être prédit.

5. Procédé selon au moins l'une des revendications précédentes, **caractérisé en ce que**
le modèle est stocké sur un serveur central et formé avec des données d'une flotte de véhicules.

6. Procédé selon au moins l'une des revendications précédentes,
**caractérisé en ce que**
la transmission d'information au conducteur est effectuée par un graphique fonctionnel, une transmission vocale et/ou une transmission textuelle.

7. Procédé selon au moins l'une des revendications précédentes,
**caractérisé en ce que**
la conduite automatisée est adaptée pour réduire la fréquence de prise en charge lors d'une prise en charge prédite par le conducteur en modifiant le comportement du véhicule roulant de manière automatisée.

8. Procédé selon au moins l'une des revendications précédentes,
**caractérisé en ce que**
les paramètres de conduite, déterminés comme efficaces pour réduire la fréquence de prise en charge, d'un véhicule dans le mode de conduite automatisé sont transférés par l'intermédiaire du serveur à d'autres véhicules.

9. Dispositif permettant d'augmenter la part de la conduite automatisée dans un véhicule roulant de manière au moins partiellement automatisée, comprenant un module (15) permettant de surveiller les conditions pour la conduite automatisée,
dans lequel
un module de surveillance (5) est configuré avec un modèle (7) stocké permettant de prédire une intention du conducteur de mettre fin à la conduite automatisée par une commande de véhicule manuelle, **caractérisé en ce que**
une unité d'action (9) transmet une information au conducteur en cas de prise en charge prédite par le conducteur lorsque les conditions pour la conduite automatisée sont remplies, laquelle information informe le conducteur d'une maîtrise fiable de la situation de conduite par la conduite automatisée.

10. Dispositif selon la revendication 9,
**caractérisé en ce que**
le module de surveillance (5) et/ou le module d'action (9) de chaque véhicule (1) d'une flotte de véhicules sont couplés sans fil à un serveur (21) externe au véhicule permettant de classer des groupes comportant des caractéristiques de transmission similaires de la conduite automatisée au mode de conduite manuel.
